(19) Europäisches Patentamt
European Patent Office
Office européen des brevets

(11) **EP 1 301 707 B1**

(12) **EUROPÄISCHE PATENTSCHRIFT**

(45) Veröffentlichungstag und Bekanntmachung des Hinweises auf die Patenterteilung:
**24.10.2007 Patentblatt 2007/43**

(21) Anmeldenummer: **01936329.0**

(22) Anmeldetag: **05.05.2001**

(51) Int Cl.:
*F03D 7/02* (2006.01)   *B64C 27/00* (2006.01)
*B64C 27/02* (2006.01)

(86) Internationale Anmeldenummer:
**PCT/EP2001/005103**

(87) Internationale Veröffentlichungsnummer:
**WO 2002/002936 (10.01.2002 Gazette 2002/02)**

(54) **VERFAHREN ZUR BESTIMMUNG DES WINKELS EINES ROTORBLATTS EINER WINDENERGIEANLAGE**

METHOD FOR DETERMINING THE ANGLE OF A ROTOR BLADE PERTAINING TO A WIND ENERGY INSTALLATION

PROCEDE POUR DETERMINER L'ANGLE D'UNE PALE DE ROTOR D'UNE INSTALLATION A ENERGIE EOLIENNE

(84) Benannte Vertragsstaaten:
**AT BE CH CY DE DK ES FI FR GB GR IE IT LI LU MC NL PT SE TR**

(30) Priorität: **04.07.2000 DE 10032314**

(43) Veröffentlichungstag der Anmeldung:
**16.04.2003 Patentblatt 2003/16**

(73) Patentinhaber: **Wobben, Aloys**
**26607 Aurich (DE)**

(72) Erfinder: **Wobben, Aloys**
**26607 Aurich (DE)**

(74) Vertreter: **Eisenführ, Speiser & Partner**
**Patentanwälte Rechtsanwälte**
**Postfach 10 60 78**
**28060 Bremen (DE)**

(56) Entgegenhaltungen:
WO-A-98/42980    DE-A- 19 739 164
GB-A- 1 213 638    US-A- 5 155 375
US-A- 5 249 470

**Beschreibung**

Bei pitchgeregelten Windenergieanlagen können die Winkel der Rotorblätter synchron (Standardlösung) oder unabhängig voneinander verstellt werden. Die Lösung zur unabhängigen Verstellung voneinander ist in der Patentanmeldung DE 197 31 918 beschrieben. Diese Lösung kann auch als Online-Einzelblattverstellung bezeichnet werden. Sowohl bei der Standardlösung als auch bei der Online-Einzelblattverstellung ist es wichtig, dass ein Ausgangsblattwinkel, z. B. Fahnenstellung oder maximaler Blattwinkel) mit hinreichender Genauigkeit eingestellt werden kann.

WO 98/42980 zeigt eine Windenergleanlage mit einem Messsystem zum Messen der Windgeschwindigkeit vor der Windenergleanlage. Das Messsystem weist ein Laseranemometriesystem auf. Das System dient dazu, die Geschwindigkeit des Windes im Bereich vor der Windenergieanlage zu erfassen.

Bei synchroner Betriebsweise muss zudem sichergestellt werden, dass alle Blätter auf dem selben Winkel einjustiert sind, d. h. dass der relative Winkel der Rotorblätter zueinander gleich Null ist.

Fehleinstellungen der Rotorblattwinkel können zu fehlerhaftem Betrieb (falsche Drehzahl-Leistungscharakteristik) oder zu Unwuchten (und damit zu Turmschwingungen) führen. Dieses hat auch erhöhte Belastungen der Anlagenbauteile zu Folge.

Solche Fehleinstellungen Können sich beispielsweise aus Fertigungstoleranzen (oder - fehlem), wie z. B. verschobenen Null-Grad-Markierungen oder verschobenen Blattanschlusspolzen ergeben.

Wenn nach Inbetriebnahme der Windenergleanlage der Verdacht auf fehlerhafte Blattwinkeleinstellungen besteht, wird bisher mit Blattschablonen gearbeitet Diese werden Ober die Blattspitzen bis zu einer definierten Stelle des Rotorblatts geschoben. Ein Sensor auf der Schablone misst bei horizontaler Stellung des Blattes den Winkel der Blattebene zur Erdoberfläche (Lotwinkel). Durch 180° Weiterdrehung des Rotors und emeute Messung werden evtl. Schiefstellungen des Turmes oder vorhandene Rotorachswinkel ausgemittelt und man erhält den absoluten Winkel des jeweiligen Rotorblattes.

Auch wenn die Sensorik heutzutage eine drahtlose DatenObermitttung erlaubt, ist diese Methode recht aufwendig, vor allem geht dieses im Hinblick auf große Rotorblätter und die dafür notwendigen großen Schablonen.

Der Erfindung liegt die Aufgabe zugrunde, die vorgenannt beschriebenen Nachteile zu vermeiden, so dass eine schnellere Ermittlung des zutreffenden Blattwinkels möglich ist und die Ergebnisse genauer sind als bisher und auch eine Vermessung vom Boden aus möglich ist, wobei die gesamte Messausrüstung einfach aufgebaut sein sollte, so dass auch ein einfacher Transport der Messausrüstung (Messequipment) möglich ist.

Die gestellte Aufgabe wird mit einem Verfahren mit dem Merkmal nach Anspruch 1 gelöst. Vorteilhafte Weiterbildungen sind in den Unteransprüchen beschrieben.

Die Erfindung ist nachfolgend anhand eines in der Zeichnung dargestellten Ausführungsbeispiels näher erläutert.

Fig. 1 zeigt die Ansicht einer Windenergieanlage mit einem Rotor, der mehrere Rotorblätter trägt und einen Turm.

Fig. 2 zeigt hierbei den Querschnitt durch eine Windenergieanlage entlang der Linie A-A Fig. 1.

Fig. 3, Fig. 4 zeigen Meßdiagramme für die Abtastung eines Rotorblattes.

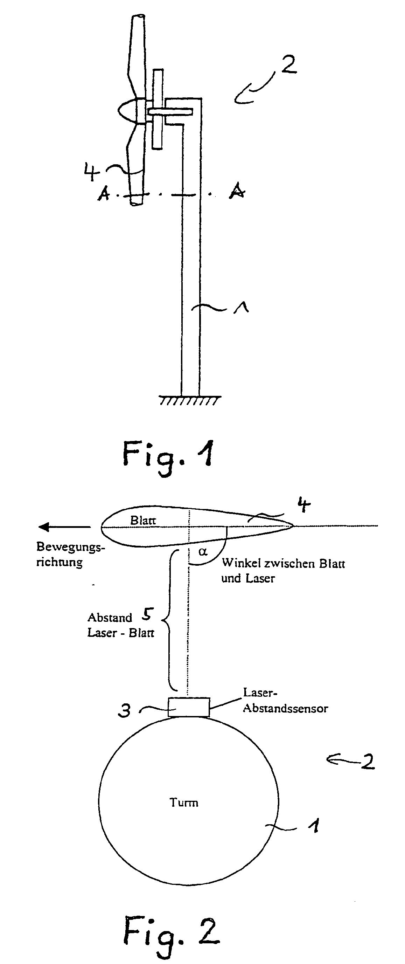

Am Turm 1 der Windenergieanlage 2 (z. B. getriebelose Anlage) ist eine Laser-Abstandssensor 3 als Abstands-Messeinrichtung angebracht. Bei laufender Anlage, wenn also ein Rotorblatt am Turm vorbei bewegt wird, misst der Abstandssensor (Fig. 2) laufend den Abstand 5 zwischen Sensor und Blatt. Während sich ein Blatt am Turm vorbeibewegt, wird dessen Oberfläche also mehrfach (z.B. 40 mal) vom Laser abgetastet und die einzelnen verschiedenen Abstände (das Blatt ist mit Querprofil wie dargestellt nicht einheitlich dick, sondern an der Vorderkante deutlich dicker, als an der Rotorblatthinterkante) gemessen.

Die hierbei gemessenen Daten (Abstandswerte zwischen Sensor und der jeweiligen abgetasteten Oberfläche des Rotorblattes) werden in einem Rechner gespeichert und verarbeitet. Über mathematische Funktionen, z. B. Regressionsgeraden, können nunmehr im Rechner die Blattwinkel der Rotorblätter ermittelt werden. Dabei wird der Winkel zwischen Blatt und Abstandssensor äußerst genau bestimmt.

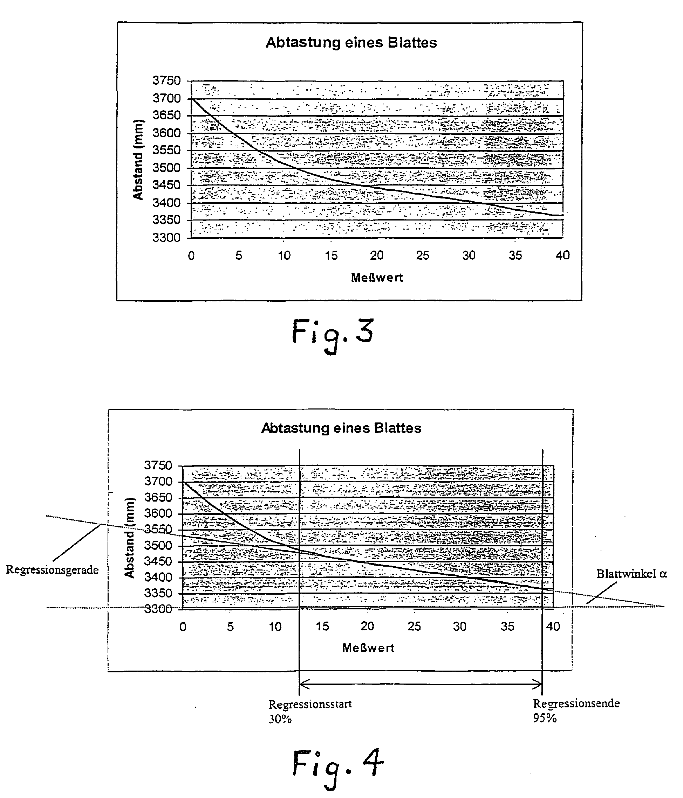

Fig. 3 zeigt die Meßwertdarstellung bei Abtastung eines Blattes, wobei in dem dargestellten Beispiel etwa 40 Meßpunkte mit einer in Auflösung von etwa 1 mm aufgezeigt sind. Die Form der Kurve gibt das untere Blattprofil vor. Der Abstand zwischen dem Blatt und dem Laser (Abstandssensor) wird durch Y-Achse angezeigt.

Die Berechnung des Winkels zwischen Laser und Blatt lässt sich der Darstellung nach Fig. 4 entnehmen. Hierbei wird zur Berechnung des Blattwinkels der hintere Abschnitt des Blattes (ca. 30 % bis 95 %) in erster Näherung als gerade angesehen. Von diesem Bereich wird die Regressionsgerade bestimmt, die sich zwischen den Meßpunkten n = 30° und n = 95° optimal anpassen soll. Die Steigung der Regressionsgeraden (a) ist ein Maß für den Blattwinkel. Die Steigung wird nach folgender Formel berechnet:

$$a = \frac{n \cdot \sum_{i=1}^{n} Xi \cdot Yi - (\sum_{i=1}^{n} Xi) \cdot (\sum_{i=1}^{n} Yi)}{n \cdot (\sum_{i=1}^{n} Xi^2) - (\sum_{i=1}^{n} Xi)}$$

Der Winkel zwischen Laser und Blatt (in Grad) wird nun über $\alpha(°)$ = arctan(a) bestimmt.

Um die Meßgenauigkeit des erfindungsgemäßen Verfahrens zu verbessern, werden mehrere Blattdurchläufe gemessen und die Daten gemittelt. Die Meßergebnisse der einzelnen Blätter werden nun gegeneinander verglichen. Anhand dieser relativen Winkel erfolgt der Abgleich; d.h. die Blätter werden auf denselben Winkel eingestellt, so dass der relative Winkel zu Null wird.

Um den "echten" Blattwinkel bestimmen zu können, d.h. den Winkel zwischen Blatt und Blattnabe, muss der Winkel zwischen Laserstrahl und Nabe bekannt sein oder sie müssen abgeglichen sein. Aus dem Winkel "Blatt zu Laserstrahl" und dem Winkel "Nabe zu Laserstrahl" lässt sich dann der echte Blattwinkel bestimmen.

**Patentansprüche**

1.  Verfahren zum genauen Bestimmen des Pitchwinkels von mindestens einem Rotorblatt einer Windenergleanlage, mit den Schritten:

    Messen des Abstands jeweils zwischen einer Vielzahl von Punkten auf der Oberfläche eines der Rotorblätter und einem Turm der Windenergleanlage während sich das Rotorblatt am Turm vorbeibewegt, wobei die Messung durch eine Abstands-Messeinrichtung erfolgt welche an dem Turm befestigt ist,
    Verarbeiten der gemessenen Daten in einem Computer, und
    Bestimmen des Pitchwinkels zwischen dem Rotorblatt und dem Turm anhand der durch den Computer verarbeiteten Daten.

2.  Verfahren nach Anspruch 1,
    **dadurch gekennzeichnet, dass** die Pitchwinkel aller Rotorblätter ermittelt werden, wobei in mehreren Blattdurchläufen gemessen wird.

3.  Verfahren nach einem der Ansprüche 1 oder 2, wobei die Abstands-Messeinrichtung einen Laser-Abstandssensor aufweist.

4.  Verfahren nach Anspruch 3,
    **dadurch gekennzeichnet, dass** zur Bestimmung des realen Pitchwinkels der Winkel zwischen dem Laserstrahl des Laser-Abstandssensors und der Nabe der windenergleanlage ermittelt wird.

5.  Verfahren nach Anspruch 4, **dadurch gekennzeichnet, dass** zur Bestimmung des Pitchwinkels des Rotorblattes der Winkel zwischen dem Rotorblatt und dem Laserstrahl sowie der Winkel zwischen der Nabe und dem Laserstrahl gemessen wird.

6.  Verfahren nach einem der vorhergehenden Ansprüche,
    **dadurch gekennzeichnet, dass** der Abstand zwischen der Abstands-Messeinrichtung und dem Rotorblatt an mehreren Stellen des Rotorblattes entlang einer Oberflächenlinie entlang zum Rotorblattquerschnitt gemessen wird.

7.  Verfahren nach einem der vorhergehenden Ansprüche,
    **dadurch gekennzeichnet, dass** die Abstands-Messeinrichtung nicht am Turm der Windenergleanlage angebracht ist, sondern am Boden oder einer anderen vordefinierten Position.

8.  Verfahren zum Justieren eines Pitchwinkels eines Rotorblattes einer Windenergieanlage, mit den Schritten:

Bestimmen der Pitchwinkel der jeweiligen Rotorblätter der Windenergieanlage gemäß einem der Verfahren nach Anspruch 1 bis 7;

Vergleichen der Pitchwinkel der jeweiligen Rotorblätter und Erzeugen eines Mittelwertes der Pitchwinkel der Rotorblätter, und

Justieren der Pitchwinkel jedes Rotorblattes, um die Pitchwinkel der einzelnen Rotorblätter aufeinander abzugleichen, so dass die Pitchwinkel der Rotorblätter zueinander gleich Null sind.

**9.** Verwendung einer Abstands-Messeinrichtung, die Abstände jeweils zwischen Punkten auf der Oberfläche eines Rotorblattes und einem Turm einer Windenergieanlage zur Ermittlung des relativen und/oder realen Pitchwinkels eines Rotorblattes der Windenergieanlage bestimmt, wobei die Abstände zwischen den Punkten auf der Oberfläche des Rotorblatts und dem Turm gemessen werden, während sich das Rotorblatt am Turm vorbeibewegt.

**10.** Verwendung nach Anspruch 9, **dadurch gekennzeichnet, dass** die Abstands-Messeinrichtung eine Laser-Abstandssensor-Einrichtung aufweist.

## Claims

**1.** Method for accurately determining the pitch angle of at least one rotor blade of a wind power installation, comprising the steps of:

measuring the distance between each of a plurality of points on the surface of one of the rotor blades and a tower of the wind power installation as the rotor blade moves past the tower, wherein the measurement is effected by a distance measuring device fastened to the tower,

processing the measured data in a computer, and

determining the pitch angle between the rotor blade and the tower on the basis of the data processed by the computer.

**2.** Method according to claim 1, **characterised in that** the pitch angles of all the rotor blades are ascertained, wherein measurement is effected in a plurality of blade passes.

**3.** Method according to either claim 1 or claim 2, wherein the distance measuring device has a laser distance sensor.

**4.** Method according to claim 3, **characterised in that** to determine the real pitch angle the angle between the laser beam of the laser distance sensor and the hub of the wind power installation is ascertained.

**5.** Method according to claim 4, **characterised in that** to determine the pitch angle of the rotor blade the angle between the rotor blade and the laser beam and the angle between the hub and the laser beam is measured.

**6.** Method according to any one of the preceding claims, **characterised in that** the distance between the distance measuring device and the rotor blade is measured at a plurality of sites on the rotor blade along a surface line along the rotor blade cross-section.

**7.** Method according to any one of the preceding claims, **characterised in that** the distance measuring device is not mounted on the tower of the wind power installation but is mounted on the ground or at another predefined position.

**8.** Method for adjusting a pitch angle of a rotor blade of a wind power installation, comprising the steps of:

determining the pitch angles of the respective rotor blades of the wind power installation in accordance with one of the methods according to claims 1 to 7;

comparing the pitch angles of the respective rotor blades and producing an average value of the pitch angles of the rotor blades, and

adjusting the pitch angles of each rotor blade in order to match the pitch angles of the individual rotor blades to one another, so that the pitch angles of the rotor blades with respect to one another are equal to zero.

**9.** Use of a distance measuring device which determines distances between each of a plurality of points on the surface of a rotor blade and a tower of a wind power installation to ascertain the relative and/or real pitch angle of a rotor blade of the wind power installation, wherein the distances between the points on the surface of the rotor blade and the tower are measured as the rotor blade moves past the tower.

**10.** Use according to claim 9, **characterised in that** the distance measuring device has a laser distance sensor device.


**Revendications**

**1.** Procédé de détermination précise de l'angle de pas d'au moins une pale de rotor d'une installation à énergie éolienne, comprenant les étapes de :

mesure de la distance respectivement entre une pluralité de points à la surface d'une des pales de rotor et une tour de l'installation à énergie éolienne pendant le déplacement de la pale de rotor sur la tour, la mesure étant réalisée par un dispositif de mesure de distance, qui est fixé à la tour,
traitement des données mesurées dans un ordinateur, et
détermination de l'angle de pas entre la pale de rotor et la tour à l'aide des données traitées par l'ordinateur.

**2.** Procédé selon la revendication 1,
**caractérisé en ce que** les angles de pas de toutes les pales de rotor sont déterminés, les mesures étant effectuées en plusieurs passages de pale.

**3.** Procédé selon l'une quelconque des revendications 1 ou 2, dans lequel le dispositif de mesure de distance présente un capteur de distance laser.

**4.** Procédé selon la revendication 3,
**caractérisé en ce que** pour déterminer l'angle de pas réel, on détermine l'angle entre le faisceau laser du capteur de distance laser et le moyeu de l'installation à énergie éolienne.

**5.** Procédé selon la revendication 4, **caractérisé en ce que** pour déterminer l'angle de pas de la pale de rotor, on mesure l'angle entre la pale de rotor et le faisceau laser, ainsi que l'angle entre le moyeu et le faisceau laser.

**6.** Procédé selon l'une quelconque des revendications précédentes,
**caractérisé en ce que** la distance entre le dispositif de mesure de distance et la pale de rotor est mesurée à plusieurs positions de la pale de rotor suivant une ligne de surface le long de la section transversale de la pale de rotor.

**7.** Procédé selon l'une quelconque des revendications précédentes,
**caractérisé en ce que** le dispositif de mesure de distance n'est pas installé sur la tour de l'installation à énergie éolienne, mais au sol ou à un autre endroit prédéfini.

**8.** Procédé de réglage d'un angle de pas d'une pale de rotor d'une installation à énergie éolienne comprenant les étapes de :

détermination des angles de pas de chaque pale de rotor de l'installation à énergie éolienne selon un des procédés selon les revendications 1 à 7 ;
comparaison des angles de pas des pales de rotor respectives et génération d'une valeur moyenne des angles de pas des pales de rotor, et
réglage des angles de pas de chaque pale de rotor pour égaliser les angles de pas de chaque pale de rotor, de sorte que les angles de pas entre pales de rotor sont égaux à zéro.

**9.** Application d'un dispositif de mesure de distance, qui détermine les distances respectives entre des points à la surface d'une pale de rotor et une tour d'une installation à énergie éolienne permettant de déterminer l'angle de pas relatif et/ou réel d'une pale de rotor de l'installation à énergie éolienne, les distances entre les points à la surface de la pale de rotor et la tour étant mesurées pendant le déplacement de la pale de rotor sur la tour.

**10.** Application selon la revendication 9, **caractérisée en ce que** le dispositif de mesure de distance comporte un dispositif de capteur de distance laser.

Fig. 1

Fig. 2

**Abtastung eines Blattes**

Abstand (mm) / Meßwert

Fig. 3

**Abtastung eines Blattes**

Regressionsgerade

Abstand (mm) / Meßwert

Blattwinkel α

Regressionsstart
30%

Regressionsende
95%

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19731918

- WO 9842980 A